## Europäisches Patentamt

## European Patent Office

## Office européen des brevets

(11) Veröffentlichungsnummer: **0 083 788**

**A2**

(12) # EUROPÄISCHE PATENTANMELDUNG

(21) Anmeldenummer: **82111998.9**

(22) Anmeldetag: **24.12.82**

(51) Int. Cl.³: **B 29 F 1/14**
**B 29 F 1/022, B 22 D 17/22**

(30) Priorität: **02.01.82 DE 3200015**

(43) Veröffentlichungstag der Anmeldung:
**20.07.83 Patentblatt 83/29**

(84) Benannte Vertragsstaaten:
**AT BE CH DE FR GB IT LI LU NL SE**

(71) Anmelder: **Bernhardt & Urban GmbH, Formenbau
Industriestrasse 17
D-6340 Dillenburg 2(DE)**

(72) Erfinder: **Schwedes, Günter
Hauptstrasse 25
D-6344 Dietzhölztal 1-Ewersbach(DE)**

(74) Vertreter: **Missling, Arne, Dipl.-Ing. et al,
Patentanwälte Dipl.-Ing. R. Schlee Dipl.-Ing. A. Missling
Bismarckstrasse 43
D-6300 Giessen(DE)**

(54) **Zweistufenauswerfer für Spritzguss- oder Druckgussformen.**

(57) Zweistufenauswerfer (33) für Spritzguß- oder Druckgußformen haben zwei gegeneinander verfahrbare und einen
Formhohlraum einschließende Formplatten (12, 13) sowie
zwei Auswerferplatten (16, 17; 18, 19), die je mit Auswerferstiften (25) und Profilauswerfern (23) versehen und getrennt
voneinander verschiebbar ausgebildet sind. Für eine kostengünstige Herstellung derselben, ohne dabei hohe Ansprüche
an Material und Toleranzen zu stellen und trotzdem höchste
Öffnungs- und Schließgeschwindigkeiten zu erzielen, wird
der Zweistufenauswerfer (33) aus einer Hülse (1) gefertigt,
deren eines Ende mit einem relativ zur Hülse (1) einstellbaren
Anschlag (6) für einen in der Hülse (1) angeordneten
Druckspeicher (4) versehen ist, dessen anderes Ende an
einem in der Hülse (1) frei verschiebbar angeordneten
Anschlag (37) anliegt. In diesem Anschlag (37) ist ein die
Hülse (1) durchsetzender Stift (5) befestigt, der in Langlöchern (39) derselben geführt ist. Das andere Ende der Hülse
(1) ist mit Befestigungsmitteln (7) für den Anschluß an die
der Formplatte (13) gegenüberliegende Auswerferplatte (18,
19) versehen und hat mindestens einen an der den Auswerferplatten (16, 18; 18, 19) gegenüberliegenden Seite der
Formplatte (13) befestigten Anschlag (8), wobei die diesem
unmittelbar gegenüberliegende Auswerferplatte (18) im Bereich des Anschlages (8) eine Ausnehmung (44) aufweist.

./...

EP 0 083 788 A2

Fig. 1

Patentanwälte

Dipl.-Ing. Richard Schlee
Dipl.-Ing. Arne Missling

0083788

Bernhardt & Urban GmbH, Formenbau,
Industriestraße 17, 6340 Dillenburg 2

# Zweistufenauswerfer für Spritzguß- oder Druckgußformen

Die Erfindung betrifft einen Zweistufenauswerfer für Spritzguß- oder Druckgußformen mit zwei gegeneinander verfahrbaren und einen Formhohlraum einschließenden Formplatten und mit zwei Auswerferplatten, die je mit Auswerferstiften versehen und getrennt voneinander verschiebbar sind.

Ein Entformen von Thermoplast-, Duroplast- oder Leichtmetallgußteilen ist oft nur durch einen Zweistufenauswerfer möglich. Beim ersten Hub wird in der Regel die Außenkontur freigefahren, so daß beim anschließenden zweiten Hub das Spritzgußteil vom Kern abgestreift wird. Es ist so möglich, Spritzgußtteile mit Hinterschneidungen auszuwerfen. Die Zweistufenauswerfer führen somit zwei gleichgerichtete Hübe aus, wobei die Hublänge genau einstellbar sein sollte. Darüber hinaus sollen diese Zweistufenauswerfer hohe Öffnungs- und Schließgeschwindigkeiten zulassen, so daß hohe Spritzzyklen zu erreichen sind.

Bekannt ist es,als Zweistufenauswerfer Klinkenzüge zu verwenden, die paarweise auf beiden Seiten der Spritz- bzw.

Gußform angeordnet werden. Diese Klinkenzüge haben jedoch relativ hohe Öffnungs- und Schließzeiten und können nicht in jedem Fall eingesetzt werden, da diese seitlich an der Form angebracht werden müssen und der hierfür benötigte Platz nicht immer zur Verfügung steht. Darüber hinaus sind diese Klinkenzüge nicht nur aufwendig in der Herstellung, sondern auch in der Montage, da die beiden Klinkenzüge genau aufeinander abgestimmt werden müssen. Trotz des großen Aufwandes ist die Begrenzung des ersten Hubes nicht in µm-Bereich möglich.

Des weiteren ist ein Zweistufenauswerfer bekannt, der zentral eingesetzt werden kann, so daß die bei Klinkenzügen erforderliche paarweise Anordnung entfällt. Dieser bekannte Zweistufenauswerfer besteht aus einem Ausstoßbolzen und einer diesen umgebenden Schiebehülse. Diese Schiebehülse ist mit der der Formplatte abgewandten Auswerferplatte fest verbunden. Die Schiebehülse und der Ausstoßbolzen sind durch Segmente formschlüssig verbunden. Die Schiebehülse ist wiederum in einer Spannbuchse verschiebbar, die mit der Grundplatte der Spritz- bzw. Gußform fest verbunden ist. Auf der Schiebehülse ist ein Anschlag verstellbar angeordnet, der die erste Hubbewegung begrenzt. In der Spannbuchse ist eine Nut angeordnet, in die das Ausstoßbolzen und Schiebehülse formschlüssig verbindende Segment einrasten kann und so den Ausstoßbolzen relativ zur Schiebehülse freigibt, so daß anschliessend der zweite Hub gefahren werden kann. Der Ausstoßbolzen ist mit der zweiten Auswerferplatte verbunden.Dieser bekannte Zweistufenauswerfer ist äußerst aufwendig in der Konstruktion, weist jedoch dennoch den Nachteil auf, daß die erste Hublänge nicht genau im µm-Bereich festzulegen ist, da der Beginn des zweiten Hubes vom Einrasten des Segmentes von der Ausbildung der Ausnehmung in der Schiebehülse abhängt.

Der Erfindung liegt die Aufgabe zugrunde, einen Zweistufenauswerfer der eingangs genannten Art so auszubilden, daß er wesentlich kostengünstiger als die bekannten Zweistufenauswerfer herstellbar ist und keine hohen Ansprüche an Material und Toleranzen stellt, daß der Zweistufenauswerfer in alle Formen mit dem geringsten Arbeitsaufwand einbaubar ist und höchste Öffnungs- und Schließgeschwindigkeiten und damit kürzere Spritzzyklen gestattet.

Diese Aufgabe wird erfindungsgemäß dadurch gelöst, daß der Zweistufenauswerfer aus einer Hülse besteht, deren eines Ende mit einem relativ zur Hülse einstellbaren Anschlag für einen in der Hülse angeordneten Druckspeicher versehen ist, dessen anderes Ende an einem in der Hülse frei verschiebbar angeordneten Anschlag anliegt, daß in diesem Anschlag ein die Hülse durchsetzender Stift befestigt ist, der in Langlöchern der Hülse geführt ist, wobei das andere Ende der Hülse mit Befestigungsmitteln für den Anschluß an die der Formplatte benachbarte Auswerferplatte versehen ist und aus mindestens einem an der der Auswerferplatte benachbarten Seite befestigten Anschlag, wobei die gegenüberliegende Auswerferplatte im Bereich des Anschlages mit einer diesen den freien Durchtritt gestattenden Ausnehmung versehen ist.

Beim ersten Hub des Zweistufenauswerfers werden die beiden Auswerferplatten gemeinsam verschoben, wobei der erste Hub durch den an der Formplatte angeordneten Anschlag begrenzt wird. In dem Augenblick, wo sich die der Formplatte abgewandte Auswerferplatte an den Anschlag anlegt, beginnt der zweite Hub, wobei die relative Verschiebbarkeit der beiden Auswerferplatten gegeneinander durch den verschiebbar in der Hülse gehaltenen Stift gewährleistet ist. Die auf den Anschlag auflaufende Auswerferplatte wird beim ersten Hub allein aufgrund der Vorspannung der in der Hülse angeordneten Feder mitgenommen. Hierdurch ist es auch möglich, die Kraft einzustellen, mit der beim ersten Hub die Auswerferstifte dieser Platte auf das Formstück einwirken.

Weitere vorteilhafte Ausgestaltungen der Erfindung gehen aus den Unteransprüchen in Verbindung mit Beschreibung und Zeichnung hervor.

Ein Ausführungsbeispiel der Erfindung ist im folgenden anhand der Zeichnung näher beschrieben, in dieser zeigen:

Fig. 1   einen erfindungsgemäß ausgebildeten Zweistufenauswerfer im montierten Zustand an einer Spritzgußform im Schnitt,

Fig. 2   den in Fig. 1 dargestellten Zweistufenauswerfer in Ansicht und im Schnitt,

Fig. 3   eine weitere Ausführungsform eines erfindungsgemäß ausgebildeten Zweistufenauswerfers und

Fig. 4 und 5 das Auswerfen eines Spritzgußteils in zwei Stufen.

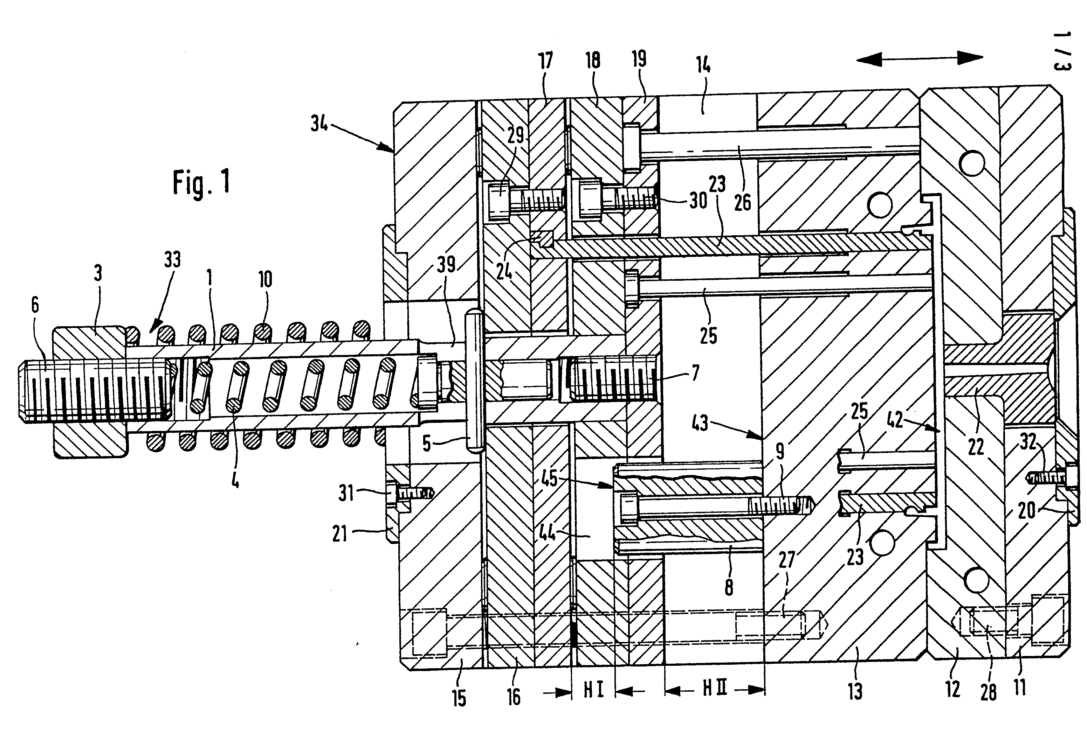

In Fig. 1 ist ein erfindungsgemäß ausgebildeter Zweistufenauswerfer 33 im Schnitt dargestellt, wie dieser an einer Spritzgußform 34 montiert ist. Der Zweistufenauswerfer 33 besteht aus einer Hülse 1, die an ihren beiden Enden mit innenliegenden Gewinden 35 und 36 versehen ist. Das Gewinde 35 nimmt einen Gewindestift 7 auf, der mit seinem freien Ende in eine Auswerferplatte 19 eingeschraubt ist. In das gegenüberliegende Gewinde 36 ist ein Gewindestift 6 mit einem Innensechskant eingeschraubt. Dieser Gewindestift dient als Widerlager für einen Arbeitsspeicher in Form einer Druckfeder 4. Das andere Ende
der Druckfeder 4 liegt an einem Anschlag 37 an, der
in Form eines Stiftes mit einem Bund 2 ausgebildet ist.
Die Hülse 1 weist zwei verschieden große Innendurchmesser
auf. In dem größeren ist die Druckfeder 4 geführt, während
in dem kleineren Durchmesser der Anschlag 37 liegt. Der
Bund 2 des Anschlages 37 liegt im Ruhezustand an dem Absatz 38 an.

Der Anschlag 37 ist in der Hülse 1 frei verschiebbar und
wird von einem Stift 5 durchsetzt, der aus der Hülse 1
herausragt und in Langlöchern 39 der Hülse geführt ist.

Auf den Gewindestift 6 des Zweistufenauswerfers 33 ist eine
Scheibe 3 aufgeschraubt, die über die Hülse 1 übersteht und
als Anlage für eine Rückholfeder 10 dient.

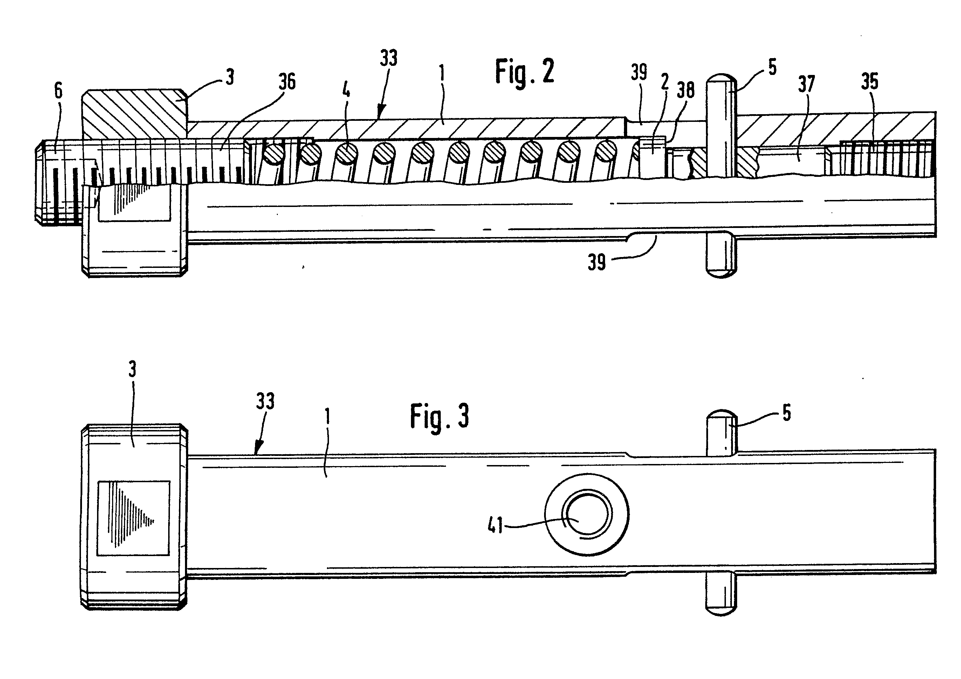

Der in Fig. 3 dargestellte erfindungsgemäße Zweistufenauswerfer unterscheidet sich von dem in Fig. 2 dargestellten lediglich dadurch, daß der Arbeitsspeicher nicht in
Form einer Druckfeder, sondern als Hydraulikzylinder ausgebildet ist, der über einen Druckanschluß 41 an einen Speicher oder an eine druckführende Leitung anschließbar ist.

Der Zweistufenauswerfer 33 ist an einer üblichen Spritzgußform 34 angeschlossen, die aus zwei Grundplatten 15, 11
besteht, wobei die Grundplatte 15 mit der Formplatte 13
über Zylinderkopfschrauben 27 verbunden ist. Zwischen der
Grundplatte 15 und der Formplatte 13 sind zwei Auswerferplatten 16, 17 bzw. 18, 19 angeordnet, die relativ zur Grundplatte 15 bzw. zur Formplatte 13 verschiebbar angeordnet
sind.

Jede der beiden Auswerferplatten 16, 17 bzw. 18, 19 besteht aus zwei Einzelplatten, die durch Zylinderkopfschrauben 29 bzw. 30 miteinander verbunden sind. Dies ist erforderlich, damit die Auswerferstifte bzw. die Profilausstoßer an diesen befestigbar sind.

An der Grundplatte 11 ist die zweite Formplatte 12 mit Zylinderkopfschrauben 28 befestigt, die zusammen mit der zweiten Formplatte 13 und den Profilausstoßern 23 einen Formraum 42 für ein Spritzgußteil begrenzen.

In der Grundplatte 11 wie auch in der Formplatte 12 ist eine Eingußdüse 22 für den Formhohlraum 42 angeordnet. Diese Eingußdüse ist durch einen Zentrierflansch 20 gehalten, der mittels Zylinderkopfschrauben 32 an der Grundplatte 11 befestigt ist.

In der Auswerferplatte 16, 17 ist der Profilauswerfer 23 mittels einer Halteleiste 24 befestigt. In der Auswerferplatte 18, 19 sind die Auswerferstifte 25 sowie die Rückdrückstifte 26 befestigt. Auf der den Auswerferplatten 16, 17 bzw. 18, 19 gegenüberliegenden Seite 43 der Formplatte 13 ist ein Anschlag 8 mittels einer Zylinderkopfschraube 9 befestigt. Diesem Anschlag 8 liegt eine Aussparung 44 in der Auswerferplatte 18, 19 gegenüber, so daß beim Verschieben der Auswerferplatten 16, 17 und 18, 19 durch den Zweistufenauswerfer 33 lediglich die Auswerferplatte 16, 17 zur Anlage an dem Anschlag 8 kommt.

An der Grundplatte 15 ist ein Zentrierflansch 21 mittels Zylinderkopfschrauben 31 befestigt. Dieser Zentrierflansch dient auch zur Anlage einer Rückholfeder 10, die zwischen diesem Zentrierflansch und der Scheibe 3 des Zweistufenauswerfers 33 angeordnet ist. Beim Auswerfvorgang wird die Feder 10 zusammengepreßt und bewirkt nach erfolgtem Ausstoßen des Formteiles die Zurückführung der Auswerferplatten 16, 17 und 18, 19 mit ihren Auswerferstiften bzw. Profilausstoßern. Diese Feder ist jedoch nicht unbedingt notwendig, die Rückführung kann auch über die Rückdrückstifte 26 erfolgen.

Der Zweistufenauswerfer ist über den Gewindestift 7 fest mit der Auswerferplatte 18, 19 verbunden, so daß diese immer der Bewegung des Zweistufenauswerfers folgt. Die Auswerferplatte 16, 17 wird über den Stift 5 mitgenommen, jedenfalls solange, bis diese am Anschlag 8 zur Anlage kommt. Der Stift 5 wird mit der Vorspannkraft der Feder 4 gegen die Auswerferplatte 16, 17 gepreßt. Dies bedeutet, daß die über die Profilauswerfer auf das Formteil ausgeübten Kräfte eingestellt werden können. Diese Einstellung der Vorspannkraft der Druckfeder 4 erfolgt durch den Gewindestift 6, der relativ zur Hülse 1 verschiebbar angeordnet ist. Mit Hilfe der Scheibe 3 ist dieser Stift festzulegen.

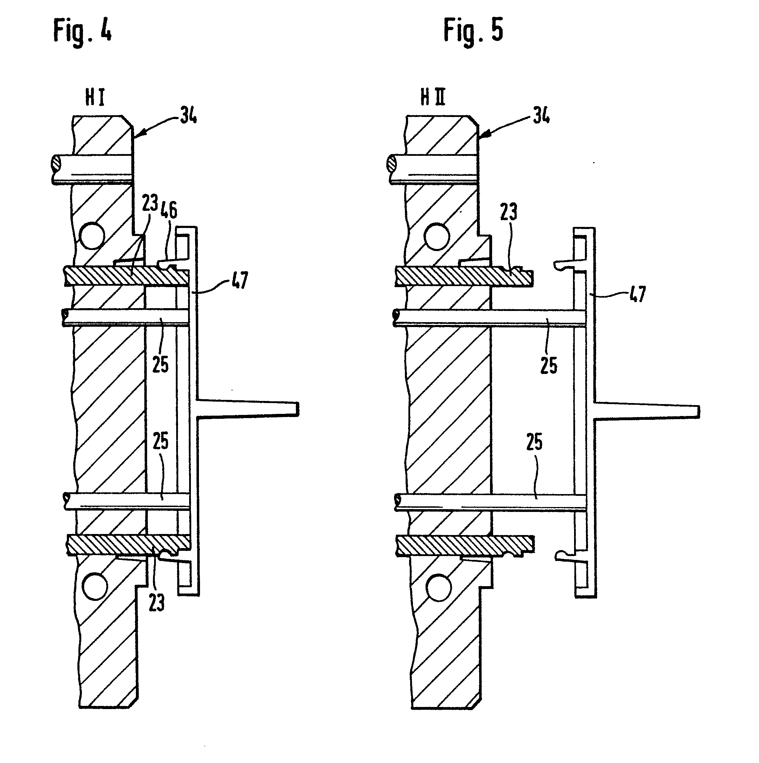

Die Arbeitshübe H I und H II - H I werden durch den Abstand der Anlagefläche 45 des Anschlages 8 von der Oberfläche der Platte 17 bestimmt. Dieser Abstand läßt sich sehr genau durch Wahl der Höhe des Anschlages 8 einstellen, so daß dieser Hub im μm-Bereich festlegbar ist. Im Hub H I werden somit beide Auswerferplatten 16, 17 und 18,19 synchron vorwärts bewegt, so daß die Außenfläche 46 des Spritzgußteiles 47 freigefahren ist. Dies ist der Zeitpunkt, in dem sich die Auswerferplatte 16, 17 an den Anschlag 8 anlegt. Aufgrund der federnden Mitnahme der Auswerferplatte 16, 17 durch den Stift 5 kann diese nun relativ zur Hülse 1 zurückgleiten, so daß nur noch die Auswerferplatte 18, 19 mit den Auswerferstiften 25 weiterbewegt wird, wie dies in Fig. 5 dargestellt ist. Das Spritzgußteil 47 kann dann ohne weiteres aus der Maschine ausgeworfen werden.

Die beiden Hublängen sind stufenlos einstellbar und auf die entsprechende Spritzgußform anzupassen. Die Betätigung des Zweistufenauswerfers 33 erfolgt in der Regel durch den hydraulischen Maschinenauswerfer oder aber durch die Öffnungsbewegung der Maschine bzw. des Werkzeuges.

Ein erfindungsgemäßer Zweistufenauswerfer zeichnet sich durch sehr geringe Herstellungskosten aus, da dieser keine besonderen Ansprüche an das Material bzw. an die Toleranzen stellt. Dieser Zweistufenauswerfer ist aus handelsüblichen Teilen hergestellt, was die Herstellungskosten senkt. Darüber hinaus ist der Einbau unproblematisch und die Hubanpassung einfach durch Bearbeitung des Anschlages 8 zu erreichen. Der Zweistufenauswerfer 33 ist ohne weiteres in alle standarisierten und nicht standarisierten Formen mit geringstem Arbeitsaufwand einbaubar, denn die Befestigung beschränkt sich auf die Verbindung des Gewindestiftes 7 mit der Auswerferplatte 18, 19. Als weiterer entscheidender Vorteil gestattet der Zweistufenauswerfer sehr kurze Öffnungs- und Schließzeiten, wodurch hohe Spritzzyklen gewährleistet sind.

Ansprüche:

1. Zweistufenauswerfer für Spritzguß- oder Druckgußformen mit zwei gegeneinander verfahrbaren und einen
Formhohlraum einschließenden Formplatten und mit zwei
Auswerferplatten, die je mit Auswerferstiften und Profilauswerfern versehen und getrennt voneinander verschiebbar sind, dadurch gekennzeichnet, daß der Zweistufenauswerfer (33) aus einer Hülse (1) besteht, deren
eines Ende mit einem relativ zur Hülse einstellbaren
Anschlag (6) für einen in der Hülse (1) angeordneten
Druckspeicher versehen ist, dessen anderes Ende an einem
in der Hülse (1) frei verschiebbar angeordneten Anschlag
(37) anliegt, daß in diesem Anschlag ein die Hülse durchsetzender Stift (5) befestigt ist, der in Langlöchern (39)
der Hülse (1) geführt ist, wobei das andere Ende der Hülse mit Befestigungsmitteln (7) für den Anschluß an die
der Formplatte (13) gegenüberliegende Auswerferplatte (18,
19) versehen ist und aus mindestens einem an der den Auswerferplatten (16, 17; 18, 19) gegenüberliegenden Seite
der Formplatte (13) befestigten Anschlag (8), wobei die
dem Anschlag unmittelbar gegenüberliegende Auswerferplatte im Bereich des Anschlages (8) eine Ausnehmung (44) aufweist.

2. Zweistufenauswerfer nach Anspruch 1, dadurch gekennzeichnet, daß der einstellbare Anschlag (6) aus einem Gewindestift besteht.

3. Zweistufenauswerfer nach Anspruch 2, dadurch gekennzeichnet, daß der Gewindestift einen Innensechskant aufweist.

4. Zweistufenauswerfer nach einem der Ansprüche 1 bis 3, dadurch gekennzeichnet, daß der verschiebbare Anschlag aus einem mit einem Bund 2 versehenen Stift besteht, der sich an einem durch eine Durchmesserverringerung geschaffenen Absatz (38) anlegt.

5. Zweistufenauswerfer nach einem der Ansprüche 1 bis 4, dadurch gekennzeichnet, daß das Befestigungsmittel (7) aus einem Gewindestift besteht, der teilweise in die Hülse (1) eingeschraubt ist.

6. Zweistufenauswerfer nach einem der Ansprüche 1 bis 5, dadurch gekennzeichnet, daß der verschiebbar in der Hülse geführte Stift (5) an der der Formplatte (13) entfernt liegenden Auswerferplatte (16, 17) anliegt.

7. Zweistufenauswerfer nach einem der Ansprüche 1 bis 6, dadurch gekennzeichnet, daß der Verschiebeweg des Stiftes (5) in der Hülse (1) mindestens gleichgroß ist wie die Differenz des Abstandes der Formplatte (13) von der Auswerferplatte (18, 19) und des Anschlages (8) von der Auswerferplatte (16, 17) (H II - H I).

8. Zweistufenauswerfer nach einem der Ansprüche 1 bis 7, dadurch gekennzeichnet, daß der Arbeitsspeicher aus einem Hydraulikzylinder oder einer Druckfeder (4) besteht.

9. Zweistufenauswerfer nach einem der Ansprüche 1 bis 8, dadurch gekennzeichnet, daß die Vorspannung des Arbeitsspeichers (4) einstellbar ist.

10. Zweistufenauswerfer nach einem der Ansprüche 1 bis 9, dadurch gekennzeichnet, daß der die Hülse verschließende Stift (7) mit einem Bund versehen ist, der als Anschlag für eine Rückholfeder (10) dient.

11. Zweistufenauswerfer nach Anspruch 10, dadurch gekennzeichnet, daß der Bund auf dem Stift (6) aufgeschraubt ist.

12. Zweistufenauswerfer nach einem der Ansprüche 1 bis 11, dadurch gekennzeichnet, daß die Größe der beiden Hübe des Zweistufenauswerfers (33) durch die Höhe des an der Formplatte (13) befestigten Anschlages (8) und dem Abstand der beiden Auswerferplatten (18, 19) von der Formplatte (13) bestimmt ist.

Fig. 1

Fig. 2

Fig. 3

Fig. 4

Fig. 5